# DEMANDE DE BREVET EUROPEEN

(11) **EP 4 782 313 A1**
(43) Date de publication de la demande: **29.07.2026**
(21) Numéro de dépôt: 25219812.2
(22) Date de dépôt: 01.12.2025
(51) Int. Cl.: B62D 25/04, B62D 27/02

(54) **VÉHICULE POURVU D'UN CADRE LATÉRAL DE PAVILLON À DÉFORMATION HOMOGÈNE**

(30) Priorité: 23.01.2025 FR 2500681
(71) Demandeur: Stellantis Auto SAS, 78300 Poissy (FR)
(72) Inventeur: THOR, TOU, 25150 PONT DE ROIDE VERMONDANS (FR); BESSETTE, DAMIEN, 25150 ECOT (FR); MAGAS, MIHAELA MARIA, 90800 ARGIESANS (FR); TROPEE, NICOLAS, 90000 BELFORT (FR); BORNIER, PAUL, 70400 LUZE (FR); MAURICE, SEBASTIEN, 25360 GONSANS (FR)
(74) Mandataire: BCIP

(57) **Abrégé**

L'invention concerne un véhicule dont le cadre latéral de pavillon comprend au moins un pied (3) dit pied central et un montant de baie (6) et un arc pavillon (7), les renforts du montant de baie (6) et d'arc pavillon (7) étant soudés ensemble par leurs extrémités (8, 9) en arrière du renfort du pied (3), le renfort du montant de baie (6) étant également soudé à une extrémité supérieure (15) du renfort du pied (3, l'extrémité (8) du renfort de montant de baie (6) soudée avec une extrémité (9) du renfort d'arc pavillon (7) comprend une tranche d'extrémité formée au moins de deux segments (11, 12) droits, parallèles, disposés selon la largeur du renfort de montant de baie (6), caractérisé en ce qu'un (12) des segments (11, 12) constitutifs de la tranche d'extrémité (8) du renfort de montant de baie (6) est situé au niveau de la zone de soudure d'une extrémité (15) droite arrière de l'extrémité (16) en T du renfort du pied (3) dit central avec le renfort de montant de baie (6).

## Description

[L'invention a trait à un véhicule pourvu d'un cadre latéral de pavillon à déformation homogène.

Ici, le terme véhicule désigne une voiture, une fourgonnette, un camion, un véhicule de transport de personnes, un véhicule de loisir tel qu'un camping-car ou un van aménagé, un engin agricole ou de travaux publics. Le véhicule est motorisé par un moteur thermique, électrique ou par une motorisation hybride. L'expression « cadre latéral de pavillon » désigne ici chaque partie latérale ou flanc, droit ou gauche, de la partie habitable ou habitacle de la caisse d'un véhicule.

Sur un véhicule, chaque flanc de la caisse du véhicule comporte, au niveau de l'habitacle, trois éléments verticaux ou montants dénommés pieds, à savoir le pied avant entre le compartiment moteur et les sièges avant, le pied milieu, également nommé pied central par la suite, entre les sièges avant et arrière, cela sauf sur les véhicules pourvus uniquement de sièges avant tels des pickups ou des fourgonnettes, et le pied arrière entre les sièges arrière et le coffre. Les pieds sont fixés en partie basse à un longeron constitutif de la caisse du véhicule. En partie haute, les pieds supportent deux éléments horizontaux reliés entre eux et constitutifs du cadre latéral du pavillon de la caisse du véhicule, à savoir de l'avant vers l'arrière du véhicule, le montant de baie qui maintient un bord du pare-brise et l'arc pavillon situé au-dessus des sièges avant et arrière. Les pieds, le montant de baie et l'arc pavillon sont des pièces métalliques allongées et creuses formées chacune de deux parties. Une partie dite doublure est placée à l'intérieur de l'habitacle, une autre partie dite renfort forme la partie externe. Les extrémités des renforts du montant de baie et de l'arc pavillon se recouvrent pour être soudées ensemble. L'extrémité configurée en T du renfort du pied central supporte et est fixée par soudure à la zone de liaison entre les renforts du montant de baie et de l'arc pavillon. En particulier, l'extrémité du renfort du pied central a des dimensions et une position telles qu'elle est soudée à une portion du renfort du montant de baie au voisinage de l'extrémité de celui-ci en recouvrement entre les extrémités des renforts du montant de baie et de l'arc pavillon. Ainsi on a, au niveau de l'extrémité du pied milieu, du fait de la superposition des tôles, une épaisseur et donc une raideur plus importante qu'en arrière du pied milieu, selon le sens de déplacement du véhicule. La zone entre la découpe verticale droite du renfort de montant de baie et la découpe du renfort de pied milieu définit une zone de pliage du cadre latéral de pavillon lors d'un choc. Le pied central supporte des éléments de sécurité tels que l'ancrage haut d'une ceinture de sécurité. De même un coussin latéral gonflable de sécurité, désigné par la suite par l'expression airbag latéral, généralement placé sur le bord du dossier d'un siège ou sur le pied central, équipe de plus en plus de véhicules. Lors d'un choc, le fonctionnement des éléments de sécurité, en particulier le déploiement de l'airbag latéral ne doit pas être affecté. Or, un tel choc générant un pli du cadre latéral de pavillon au niveau de l'arrière du renfort de pied central affecte le déploiement de l'airbag latéral. Pour éviter que la zone de flexion se situe à l'arrière du renfort du pied central, il est connu par WO-A-2023 227 838 de découper en S ou en escalier, l'extrémité du renfort du montant de baie, ce qui décale vers l'arrière la découpe du renfort de montant de baie par rapport à la zone d'accostage avec l'extrémité du renfort du pied central. On joue ainsi sur une progressivité de l'inertie entre l'arrière et l'avant du renfort du pied central et donc sur un lissage de l'inertie. La flexion du renfort du montant de baie est alors située en avant du renfort du pied milieu. Une telle position permet un déploiement de l'airbag latéral des sièges avant en cas de choc. US-B-6 217 109 décrit un renfort du pied central configuré pour renforcer l'avant et l'arrière du pied milieu, donc pour limiter la flexion du cadre latéral de pavillon. Néanmoins, avec une localisation de la flexion du renfort de montant de baie en partie avant par rapport au pied central, le choc peut induire une contrainte sur une poignée de maintien placée sur le montant de baie, en aval du pied central. Cette contrainte peut provoquer l'éjection de la poignée, cette dernière risquant alors de blesser les occupants du véhicule.

L'invention a pour objet de proposer une autre solution permettant de réaliser une déformation homogène du cadre latéral de pavillon, de part et d'autre du pied central tout en évitant, ou du moins en limitant, le risque d'éjection de la poignée de maintien dans l'habitacle lors d'un choc latéral tout en permettant un déploiement de l'airbag latéral.

À cet effet, l'invention a pour objet un véhicule dont le cadre latéral de pavillon comprend, en partie basse, au moins un pied dit pied central ou milieu et, en partie haute, un montant de baie et un arc pavillon, le pied dit central ou milieu, le montant de baie et l'arc pavillon étant creux et formés chacun d'une partie interne et d'une partie externe nommée renfort et orientée vers l'extérieur de l'habitacle du véhicule, les renforts du montant de baie et d'arc pavillon étant soudés ensemble par leurs extrémités en arrière, selon le sens de déplacement du véhicule, du renfort du pied dit central ou milieu, le renfort du montant de baie étant également soudé à une extrémité supérieure du renfort du pied dit central ou milieu configurée en T, l'extrémité du renfort de montant de baie soudée avec une extrémité du renfort d'arc pavillon comprend une tranche d'extrémité non droite et formée au moins de deux segments droits parallèles disposés selon la largeur du renfort de montant de baie, caractérisé en ce qu'un des segments constitutifs de la tranche d'extrémité du renfort de montant de baie est situé au niveau de la zone de soudure d'une extrémité droite arrière, selon le sens de déplacement du véhicule, de l'extrémité en T du renfort du pied dit central ou milieu avec le renfort de montant de baie.

Grâce à l'invention, on obtient un cadre latéral du pavillon d'un véhicule avec une inertie homogène de l'arc pavillon et du montant de baie, cela de part et d'autre du pied central. La zone d'accostage entre la barre du T constitutif de l'extrémité du renfort du pied milieu et le renfort de montant de baie est identique en avant et en arrière du renfort de pied milieu et moindre qu'au niveau de la barre du T de l'extrémité du renfort du pied milieu qui est soudé au renfort de montant de baie. Ainsi, lors d'un choc latéral, on a une flexion du cadre latéral de pavillon homogène de part et d'autre du pied milieu. En répartissant la zone de flexion du cadre latéral de pavillon à l'avant et à l'arrière du pied milieu, on autorise et on ne gêne pas le déploiement de l'airbag latéral positionné sur le pied central et on évite, ou du moins on limite, le risque d'éjection de la poignée de maintien dans l'habitacle puisque la flexion est répartie en avant et en arrière du renfort du pied milieu. On renforce ainsi la sécurité des passagers, sans pièce supplémentaire, sans surpoids et sans coût supplémentaire et sans affecter le procédé de fabrication du véhicule.

Selon des aspects avantageux, mais non obligatoires de l'invention, un tel véhicule peut comprendre une ou plusieurs des caractéristiques suivantes :

Un segment constitutif de l'extrémité du renfort de montant de baie s'étend, à partir du bord inférieur du renfort de montant de baie et le second segment constitutif de l'extrémité du renfort de montant de baie s'étend, à partir du bord supérieur du renfort de montant de baie, l'extrémité du second segment étant dépourvue de feuillure.

Le segment constitutif de la tranche d'extrémité du renfort de montant de baie qui est situé au niveau de la zone de soudure d'une tranche d'extrémité droite arrière, selon le sens de déplacement du véhicule, de l'extrémité en T du renfort du pied dit central ou milieu avec le renfort de montant de baie est parallèle à la tranche d'extrémité et pratiquement placé dans son prolongement, l'écartement entre le segment et la tranche d'extrémité étant inférieur à 10 mm.

L'extrémité du renfort de montant de baie est configurée en double h.

L'invention sera mieux comprise et d'autres avantages de celle-ci apparaîtront plus clairement à la lecture de la description qui va suivre, donnée uniquement à titre d'exemple non limitatif et faite en référence aux dessins annexés dans lesquels:
[Fig.1] est une vue en perspective partielle et simplifiée, à partir du côté gauche, d'une partie de la carrosserie d'un véhicule de type voiture,
[Fig.2] est une vue en perspective et à plus grande échelle, du détail II à la figure 1 à partir de l'extérieur du véhicule,
[Fig.3] est une vue en perspective, par le haut selon la flèche III, l'intérieur de l'habitacle étant orienté vers le bas de la figure, d'une partie du cadre latéral de pavillon illustré à la figure 1 à l'issue d'un choc latéral et
[Fig.4] est une vue similaire à la figure 2, à une autre échelle, illustrant la flexion du cadre latéral de pavillon après un choc latéral.

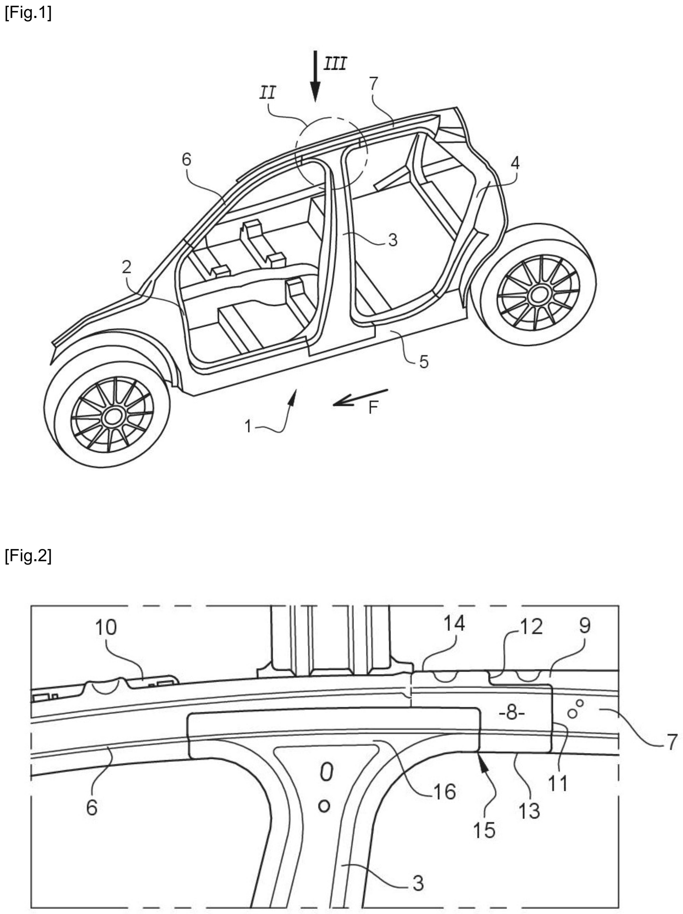

Il est rappelé que, par la suite, le terme airbag sera préférentiellement employé. De même, les expressions pied central et pied milieu seront indifféremment utilisées. La figure 1 illustre une partie de la carrosserie d'un véhicule. Ici, il s'agit du flanc gauche de l'habitacle 1, selon le sens du déplacement de véhicule illustré par la flèche F. Typiquement, il s'agit d'un véhicule pourvu de sièges arrière. En variante ce peut être un véhicule dépourvu de sièges arrières tels une fourgonnette ou un pickup. L'invention sera décrite par la suite en référence au flanc gauche de l'habitacle 1 du véhicule, sachant que le flanc droit est identique et que l'invention s'applique avantageusement aux deux côtés de l'habitacle 1 du véhicule. En partant de l'avant du véhicule, donc à partir de la gauche à la figure 1, on a en partie basse trois éléments globalement verticaux, nommés pied avant 2, pied central ou milieu 3 et pied arrière 4. Ces pieds 2, 3 et 4 sont reliés à un longeron 5 définissant un bord inférieur de l'habitacle. Les pieds 2 à 4 sont reliés, en partie haute, à deux éléments globalement horizontaux, formant le haut du cadre latéral de pavillon donc formant la structure latérale du toit du véhicule. Ces deux éléments horizontaux sont nommés montant de baie 6 et arc pavillon 7. Par la suite, l'expression cadre latéral de pavillon désignera préférentiellement la partie haute du flanc du véhicule.

Le montant de baie 6 s'étend principalement entre le pied avant 2 et le pied central 3. L'arc pavillon 7 est quant à lui situé entre le pied central 3 et le pied arrière 4. Par convention, par rapport au sens de déplacement du véhicule, on indique que le montant de baie 6 est en avant ou en aval du pied central 3 alors que l'arc pavillon 7 est en arrière ou en amont du pied central 3. Ces différents éléments 2 à 7 assurent le maintien et la rigidité du toit de l'habitacle en préservant un volume pour les occupants du véhicule. On note que le pied central 3 assure le maintien, sensiblement en position médiane, donc entre les sièges avant et arrière, du toit du véhicule. C'est au voisinage de la zone de soudure entre une extrémité 8 du montant de baie 6 et une extrémité 9 de l'arc pavillon 7 que le pied central 3 est soudé à ces deux éléments. Plus précisément, le pied 3 est soudé sur le montant de baie 6, au voisinage de la zone de recouvrement de ce dernier avec l'arc pavillon 7.

Le montant de baie 6, l'arc pavillon 7 ainsi que le pied central ou milieu 3 sont des structures allongées et creuses. Le montant de baie 6, l'arc pavillon 7 et le pied central 3 comprennent, chacun, une partie dite interne orientée vers l'intérieur de l'habitacle et visible par les occupants du véhicule. Cette partie est dénommée doublure. Le montant de baie 6, l'arc pavillon 7 et le pied central 3 comprennent également chacun une partie dite externe orientée vers l'extérieur de l'habitacle et visible uniquement lorsque l'on est à l'extérieur du véhicule. Cette partie est dénommée renfort. Les renforts comportent un corps principal creux à section transversale globalement en U. Par la suite, pour faciliter la lecture et dans la mesure où l'invention concerne spécifiquement les renforts, les renforts du montant de baie et de l'arc pavillon auront également les références 6, respectivement 7.

Les renforts du montant de baie 6 et de l'arc pavillon 7 sont reliés, au niveau de l'aboutement de leurs extrémités 8, 9 par soudure. Pour cela, il faut une zone de recouvrement mutuel entre les extrémités 8 et 9. Ainsi, les tranches des extrémités 8, 9 ne sont pas droites, mais de formes complexes afin d'obtenir un recouvrement mutuel des extrémités 8, 9. Dans tous les cas, les extrémités 8, 9 sont de formes complémentaires afin d'assurer un recouvrement mutuel. Sur de nombreux véhicules, un coussin gonflable de sécurité ou air bag latéral, non illustré, est monté sur la partie haute du bord du siège avant ou sur le haut du pied central 3. Un tel airbag assure la protection du haut du corps des occupants des sièges avant lors d'un choc latéral. Il est nécessaire que l'absorption du choc, et donc la déformation du pied central 3 et du cadre de pavillon latéral, s'effectue sans affecter le déploiement de cet airbag latéral. Par ailleurs, chaque côté du cadre de pavillon latéral est pourvu, en partie haute, d'au moins une poignée de maintien 10, visible aux figures 2 à 4. Lors d'un choc latéral, il convient également que la poignée 10 reste fixée sur le cadre de pavillon latéral et ne constitue pas un projectile susceptible de blesser un occupant du véhicule.

De manière connue, une zone de recouvrement des extrémités 8, 9 des renforts de montant de baie 6 et de l'arc pavillon 7 peut être réalisée à partir de découpes des extrémités 8, 9 conférant à ces dernières, par exemple une forme en S ou en escalier. La zone de recouvrement entre les renforts du montant de baie 6 et de l'arc pavillon 7 étant située en arrière du pied central 3. Une telle configuration optimise la variation d'inertie lors du choc et renvoi la déformation du cadre latéral de pavillon en avant du pied central 3, selon le sens de déplacement du véhicule. En d'autres termes, la flexion du cadre latéral de pavillon est localisée sur le renfort de montant de baie 6 en aval du pied central 3, sans affecter significativement le pied central 3 ce qui n'affecte pas le déploiement de l'airbag latéral.

Il s'avère néanmoins que la flexion en partie avant du renfort de montant de baie 6 induit une contrainte sur la poignée de maintien, plus particulièrement sur le renfort de fixation 10 de la poignée de maintien qui solidarise la poignée de maintien au montant de baie 6. Une telle contrainte peut entraîner la rupture de la fixation du renfort de fixation 10 de la poignée. Une telle rupture peut dans certains cas provoquer l'éjection de la poignée de maintien à l'intérieur de l'habitacle, donc potentiellement provoquer des blessures aux occupants du véhicule. L'invention permet de remédier à cet inconvénient.

Pour cela, comme cela est particulièrement visible à la figure 2, le profil de la découpe de l'extrémité 8 du renfort de montant de baie 6 comprend deux segments droits 11, respectivement 12, parallèles s'étendant selon la largeur du renfort de montant de baie 6. Le segment 11 s'étend à partir du bord inférieur 13 du renfort de montant de baie 6, le bord inférieur étant celui orienté vers le sol. Le segment 12 s'étend lui à partir du bord supérieur 14 du montant de baie 6 et son extrémité est dépourvue de feuillure. Un segment horizontal 15 relie l'extrémité inférieure du segment 12 à l'extrémité supérieure du segment 11. On réalise ainsi une découpe de l'extrémité 8 du renfort de montant de baie 6 globalement en forme de h, donc de forme inverse d'une découpe en S. On conçoit que l'extrémité 9 du renfort d'arc pavillon 7 est de forme complémentaire afin de réaliser un recouvrement mutuel, des renforts de montant de baie 6 et de l'arc pavillon 7, selon la largeur de ces éléments.

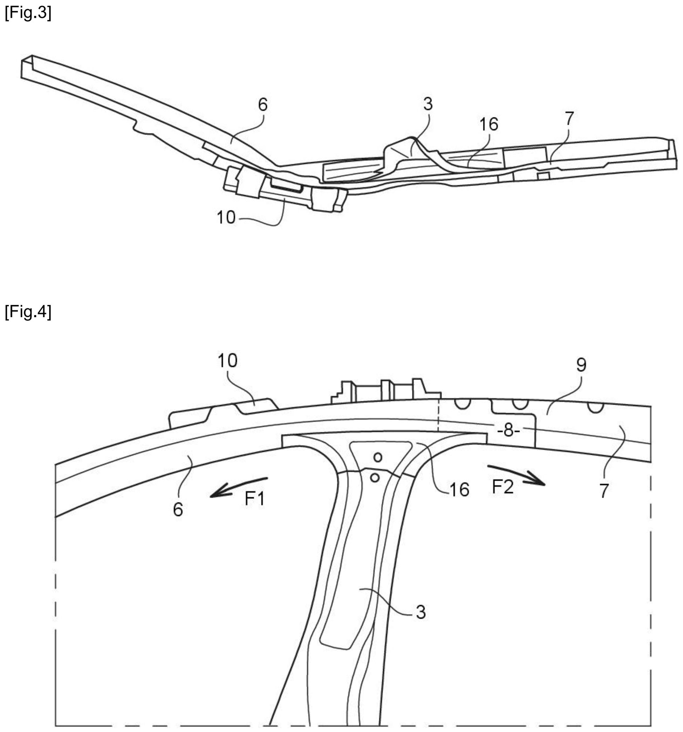

Comme on le note aux figures 2 et 4, l'extrémité 8 du renfort de montant de baie 6 est positionnée au plus près d'une tranche d'extrémité 15 de la partie terminale 16 en forme de T du renfort de pied central 3. Une telle configuration a pour effet technique de permettre le rapprochement du second segment 12 constitutif de l'extrémité 8 de la tranche d'extrémité droite 15. Ainsi, le segment 12 est parallèle à la tranche d'extrémité 15 et pratiquement placé dans son prolongement, l'écartement entre le segment 12 et la tranche d'extrémité étant inférieur à 10.mm. Ainsi, il y a coïncidence entre le plan défini par le segment 12 et celui de l'extrémité 15. En d'autres termes, l'extrémité 8 est positionnée de sorte à être au plus près de la zone de soudure de l'extrémité 16 du pied central 3. On supprime ainsi, ou du moins on limite au minimum, la zone d'inertie présente dans l'état de la technique entre l'extrémité 15 du renfort de pied central 3 et l'extrémité 8 du renfort de montant de baie 6. On obtient alors deux zones, situées de part et d'autre de l'extrémité supérieure 16 en forme de T du renfort de pied milieu 3 équivalentes, donc avec une inertie similaire.

Comme cela apparaît notamment à la figure 4, lors d'un choc latéral, on a une flexion homogène, illustrée par les flèches F1 et F2, du cadre latéral de pavillon en avant et en arrière du pied milieu 3. En d'autres termes, les efforts sont équitablement répartis de chaque côté du pied milieu, ce qui génère un pli du renfort du montant de baie 6 et du renfort d'arc pavillon 7 similaire. Outre que cela n'affecte pas le déploiement de l'airbag latéral, on a un effort moindre sur la partie du montant de baie recevant le renfort de fixation 10 de la poignée de maintien. Il y a donc un risque faible de détachement de la poignée, ce qui participe à la protection des occupants du véhicule.

En variante l'extrémité 8 peut être d'une autre forme, par exemple en double h. L'important étant que, dans tous les cas, un des segments 11 ou 12 de l'extrémité 8 est situé au plus de l'extrémité 15 afin de limiter les dimensions de la zone d'inertie entre la partie terminale 16 du renfort de pied central 3 et l'extrémité 8 du renfort de montant de baie 6.

## Revendications

1. Véhicule dont le cadre latéral de pavillon (1) comprend, en partie basse, au moins un pied (3) dit pied central ou milieu et, en partie haute, un montant de baie (6) et un arc pavillon (7), le pied (3) dit central ou milieu, le montant de baie (6) et l'arc pavillon (7) étant creux et formés chacun d'une partie interne et d'une partie externe nommée renfort et orientée vers l'extérieur de l'habitacle du véhicule, les renforts du montant de baie (6) et d'arc pavillon (7) étant soudés ensemble par leurs extrémités (8, 9) en arrière, selon le sens de déplacement (F) du véhicule, du renfort du pied (3) dit central ou milieu, le renfort du montant de baie (6) étant également soudé à une extrémité supérieure (15) du renfort du pied (3) dit central ou milieu configurée en T, l'extrémité (8) du renfort de montant de baie (6) soudée avec une extrémité (9) du renfort d'arc pavillon (7) comprend une tranche d'extrémité non droite et formée au moins de deux segments (11, 12) droits, parallèles, disposés selon la largeur du renfort de montant de baie (6), **caractérisé en ce qu'**un (12) des segments (11, 12) constitutifs de la tranche d'extrémité (8) du renfort de montant de baie (6) est situé au niveau de la zone de soudure d'une extrémité (15) droite arrière, selon le sens de déplacement (F) du véhicule, de l'extrémité (16) en T du renfort du pied (3) dit central ou milieu avec le renfort de montant de baie.

2. Véhicule selon la revendication 1, **caractérisé en ce qu'**un segment (11) constitutif de l'extrémité (8) du renfort de montant de baie (6) s'étend, à partir du bord inférieur (13) du renfort de montant de baie (6) et le second (12) segment constitutif de l'extrémité (8) du renfort de montant de baie (6) s'étend, à partir du bord supérieur (14) du renfort de montant de baie (6), l'extrémité du second segment (12) étant dépourvue de feuillure

3. Véhicule selon la revendication 1, **caractérisé en ce que** le segment (12) constitutif de la tranche d'extrémité (8) du renfort de montant de baie (6) qui est situé au niveau de la zone de soudure d'une tranche d'extrémité (15) droite arrière, selon le sens de déplacement (F) du véhicule, de l'extrémité (16) en T du renfort du pied (3) dit central ou milieu avec le renfort de montant de baie (6) est parallèle à la tranche de l'extrémité (15) et pratiquement placé dans son prolongement, l'écartement entre le segment (12) et la tranche d'extrémité (15) étant inférieur 10.mm.

4. Véhicule selon la revendication 1, **caractérisé en ce que** L'extrémité (8) du renfort de montant de baie (6) est configurée en double h.
